Europäisches Patentamt

European Patent Office

Office européen des brevets

(11) Publication number: **0 124 530**
**B1**

(12) **EUROPEAN PATENT SPECIFICATION**

(45) Date of publication of patent specification: **07.01.88**

(51) Int. Cl.⁴: **G 01 M 13/04, F 16 C 19/52**

(21) Application number: **83901951.0**

(22) Date of filing: **30.05.83**

(86) International application number:
**PCT/SE83/00215**

(87) International publication number:
**WO 83/04436 22.12.83 Gazette 83/29**

(54) **APPARATUS FOR DETERMINING THE CONDITION OF A ROLLING BEARING.**

(30) Priority: **10.06.82 SE 8203590**

(43) Date of publication of application:
**14.11.84 Bulletin 84/46**

(45) Publication of the grant of the patent:
**07.01.88 Bulletin 88/01**

(84) Designated Contracting States:
**AT BE CH DE FR GB LI LU NL SE**

(56) References cited:
**DE-A-1 448 017**
**DE-A-1 648 542**
**DE-A-2 845 165**
**DE-C-2 947 937**
**GB-A- 905 357**
**GB-A- 938 383**

(73) Proprietor: **AB SCANIAINVENTOR**
**Box 16036**
**S-250 16 Helsingborg (SE)**

(72) Inventor: **SIWERSSON, Olle Lennart**
**Avangsgatan 2**
**S-253 71 Helsingborg (SE)**
Inventor: **LOODBERG, Jan Ake Torsten**
**Postlada 1061**
**S-260 41 Nyhamnsläge (SE)**

(74) Representative: **Berglund, Gustav Arthur et al**
**AWAPATENT AB Box 5117**
**S-200 71 Malmö (SE)**

Courier Press, Leamington Spa, England.

EP 0 124 530 B1

## Description

This invention relates to an apparatus for determining the condition of a rolling bearing having rolling elements, preferably with a roller cage, which rolling elements are adapted to roll on the races of two thus relatively movable rings.

The need for monitoring and controlling various forms of rolling bearings increases in step with the increased degree of automation in industry. Considering the negative effects in terms of operation and cost that may be caused by faults in rolling bearings, it is readily realized that great profits can be achieved by suitable monitoring measures.

DE—A—1 448 017 discloses a ball bearing test equipment which cannot test the ball bearing during actual operation. The equipment comprises a signal generator which serves to provide a measure of the angle of rotation in consequence of the rolling friction. The signal generator is not and cannot be used for current supply purposes.

Several attempts have been made to provide automatic monitoring of bearings in operation. Thus, there have been suggested both simple methods, such as listening, and relatively sophisticated electronic measuring methods.

DE—A—1 648 542 discloses a monitoring means for a rolling bearing having rolling elements which are adapted to roll on the races of the relatively movable rings, said means comprising a detecting device for detecting a condition of the rolling bearing, an indicating device for indicating the condition detected, and a generator for supplying power to electronic devices and circuitry of the means.

The object of the present invention is to improve the monitoring means according to DE—A—1 648 542 such that dimensional changes can be detected in operation of the rolling bearing without the use of an external power supply, i.e. that is external to the combination of the monitoring means and the rolling bearing.

To achieve the object outlined above the present invention now suggests the provision of a monitoring means of the type referred to in the preamble of Claim 1 and which is characterised in that the detecting device includes a first detector to detect the number of revolutions of the roller cage relative to one of the rings, a second detector to detect the number of revolutions of the other of the rings relative to the afore-mentioned one of the rings, the detection by said first and second detectors being made during the same time period, that the indicating means indicate the condition of the rolling bearing dependent on the result of a comparison of the relationship between the detected numbers of revolutions with a reference value for the same relationship, and that the generator is driven by the relatively movable rings.

The monitoring means can be realized by the use of inductive, capacitive, optical, resistive, mechanical or hydraulic transducers.

In the inductive case permanent magnets mounted for example on a rotatable shaft can be utilized in combination with fixedly arranged Hall elements. This embodiment permits controlling the bearing statically and dynamically, is rather insensitive to non-magnetic soiling and can give a high exactitude considering that sensitive component parts are available.

In the capacitive case, capacitor foils can be arranged on an outer ring while the shaft proper can be exploited as an opposite capacitor foil. Static as well as dynamic deviations can be detected by this design. The solution is structurally simple and provides an energy saving detection. Air or grease can be used as dielectric.

In the optical case, use can be made for example of a light transmitter which emits a beam towards the rotating shaft in a radial plane, in combination with, say, a CCD element which may be of the linear or matrix type. In the latter embodiment, it will be possible also to obtain information about an axial play, if any. This solution gives a high exactitude, is relatively simple to adjust and also relatively insensitive to impurities. It permits monitoring the bearing both statically and dynamically. Component parts, however, are relatively expensive and energy consuming.

In the resistive case, for example an embodiment using conductive plastics as a pressure transducer is conceivable. This monitoring means can be designed as a non-loaded rolling bearing, in which resistive transducers of flexible plastic are arranged in a flexible suspension ring for the outer ring of the non-loaded bearing. This embodiment permits both static and dynamic monitoring, is simple to manufacture, relatively energy-saving and can be conceived hermetically encapsulated. The means is also self-centering and as a consequence self-adjusting. Axial play can be detected with the use of a resistive detecting device of this kind.

In the mechanical case, radial play of a rotatable shaft can be by means of a detector biased against the shaft and being capable of reacting to an extremely small mechanical displacement so as to release a mechanical indicating device when said displacement exceeds a predetermining value. In this mechanical embodiment, the detecting device is simple to mount, simple to adjust and requires no electric power generator.

In the hydraulic case, use is made of a hydraulic fluid passage surrounding the shaft and optionally divided into several part passages. The pressure of the hydraulic fluid can be sensed at one or more points by pressure sensors, and as vibrations in the shaft variations arise in the signals emitted by the pressure sensor or sensors. This embodiment requires no adjustment whatsoever, places low requirements on the precision of gaps and the like, and is energy saving. For static monitoring said passage has to be divided into several parts, and an adjustment will also be necessary.

The monitoring means according to the invention requires an indicating device which may be of the electric type and make use of say liquid crystals, light emitting diodes or light guides. A purely mechanical indication is also possible, particularly in the above-described case of mechanical detection. The indicating device is preferably designed as a merely locally indicating device, i.e. entirely built into the monitoring means, but it is of course possible to connect the indicating device to a central common to several monitoring means.

The detecting device used in connection with the monitoring means, however, is of a design which bases its detection on a determination of the condition of the rolling bearing, in which changes in bearing geometry are exploited.

Rolling bearings can be compared to planetary gearings in which the paths of meshing gears have been replaced by rolling element races. In a gearing the relative rotation of the parts always takes place under the control of gear teeth and the transmission ratio is thus constant. In a rolling bearing, the transmission ratio is dependent upon the dimensions of the parts of the bearing and the sliding of the rolling element races at the contact surfaces. Any change in the geometry of the rolling element races thus also results in a change of the transmission ratio between the parts of the bearing.

On dimensional changes in the component parts of the bearing because of deformations, wear, temperature changes, load changes or lubrication changes, the relations between the relative transmission ratio or angular rotation of the parts of the bearing will thus change. These dimensional changes, such as changes in radius of a thousandth of a millimetre, normally are difficult to detect in operation, for which reason this invention instead makes use of the way in which these dimensional changes reflect on the circumferences of the bearing parts, i.e. use is made of the changing relations between the lengths of the orbits. By this procedure, the desirable exactitude is readily attained since the changing displacements of the rolling element races relative to each other because of dimensional changes increase with the increasing number of revolutions.

According to the invention, the speed relation between the bearing parts rotating about the centre of the bearing, i.e. the outer ring, the roller cage and the inner ring, is measured. One of said bearing parts is considered as stationary even if all bearing parts actually may rotate. The movements of the outer and inner rings in most cases can be measured from outside. The detection of the angular rotation of the bearing parts should preferably be made without contact and digitally with great resolution per turn. The rotation of the roller cage can be detected with the aid of the rolling elements when these go past a measuring zone. The greater the number of rolling elements contained in the rolling bearing the greater the resolution. As the rolling elements generate an impact each time they enter a loading zone, it is possible to "listen to" or sense said impact at the passage of the rolling elements and thereby to indicate the speed of the roller cage.

Arising vibration and sound frequencies are in a machine speed relation to the angular speeds of the rotating bearing parts. The angular speeds in turn are in a mutual relation to each other by their geometric dimensions.

The detection of the movements of the roller cage can thus take place by a count of passing rolling elements, say by radially transilluminating the bearing housing, the bearing and the seals with a gamma ray.

A further possibility of detecting the movement of the roller cage is to utilize one or more inductive transducers which are so mounted that a pulse train generated by the rolling elements is obtained, possibly together with a separate pulse train for the rotation of the outer or inner ring. In the latter case it is also suitable to build all electronic devices and circuitry as a unit into the bearing housing together with the power supply unit and the indicating unit.

As mentioned in the foregoing, a rolling bearing can be compared to a planetary gearing without gear teeth. There does not occur any engagement between the races which engage each other only in the loaded parts of the bearing. Sliding and other faults may arise in the contact surfaces and the rolling elements can advance by leaps because of irregularities or vibrations. The rolling distances therefore will not be exactly the same as if an engagement by gear teeth had taken place.

A fresh bearing which is correctly mounted, loaded and greased, like the planetry gearing, has a transmission ratio theoretically dependent on the radii of the component parts. As it is necessary to indicate differences in radius of thousandths of a millimeter, one has to take into account the deformation of the various parts after mounting, loading and temperature increase. Thus, the geometry of the bearing is variable. The machine elements are elastic and moreover the geometric measures are influenced by the grease film.

By counting a definite number or parts of a revolution of one of the bearing rings and, during the same time, counting the number or parts of a revolution of the roller cage, it is possible to determine the current transmission ratio of the bearing. The new value of this ratio should coincide with the theoretically calculated one, if the bearing is correctly mounted. This thus gives the possibility of a simple mounting control.

The permissible differences in the transmission ratio have to be judged from case to case and shall permit being readily programmed. By taking the temperature into account it is possible to judge whether the bearing is worn, too much loaded or enlarged by temperature.

The races of the outer ring, the rolling elements and the inner ring theoretically always run equally far. If the radius of any of them changes or if any one of them slides or jumps relative to the other, the relation between the displacements of the bearing parts or the rotation angles change and so does the transmission ratio.

Different bearing dimensions and bearing types have different transmission ratios; application and actual conditions must also be taken into account. To judge changes of conditions in bearings attention therefore also has to be paid to matters that do not result from deformation and wear. This can be done with the aid of a computer which by means of measured values derived from the speed measurements and from say temperature, vibration and/or sound measurements, can distinguish between different reasons for changes of conditions in a bearing.

For example, a higher temperature inside the bearing than outside it, implies frictional losses. The temperature difference is coupled to the speed and the load of the bearing. The more worn the bearing, the coarser the bearing surfaces and as a result the temperature can increase even if the load does not.

To take temperature differences into account, the bearing housing can be provided with a through temperature measuring nipple which consists of a heat insulating tube and a heat conductive internal rod in said tube, the lower part of said rod connecting onto the stationary, temperature monitored bearing ring. The temperature measuring head as well as sound and vibration measuring heads can be connected to the upper part of said rod.

For vibration and sound measurement, for example a piezo electric transducer can be connected to a metal nipple screwed into the bearing housing. The closer this nipple is to the rolling elements in the load zone, the better. The vibration and sound frequencies can be compared with the speed of the bearing and sorted into the frequencies expected on the basis of the transmission ratio. If the resulting frequency derives from the rolling element pulse train and is distinct no transducer is necessary within the bearing to indicate rolling elements.

In an evaluating unit, for example the transmission ratio and the tolerated variation therein can be programmed. In the same way the highest permissible temperature difference and quickest temperature rise can be programmed. Permissible vibration frequencies and levels can be programmed in the same way.

The power generator of the monitoring means according to the invention may further comprise a stationary induction coil connected to a central unit. In this case, the rotating machine part/bearing part is provided with one or more fixedly mounted permanent magnets which move past the induction coil. The current pulses generated can charge a chargeable buffer battery and can be utilized at the same time to indicate the number of revolutions or part revolutions of the bearing ring.

The indicating device of the monitoring means may in the simplest case be solely an alarm contact with adjustable alarm level. A light emitting diode on the monitoring means proper can indicate good or poor condition of the rolling bearing. Of course, several alarm levels may be provided.

The monitoring means may for example include two speed transducers, one of which is associated with one bearing ring while the other transducer is associated with the roller cage, transducers for two temperatures, i.e. one transducer in the interior of the bearing and another transducer on the outer side thereof, vibration and sound transducers, and bearing load transducers, i.e. wire strain gauges.

The evaluating unit may be a microcomputer for making calculations and for compilation of measured values.

The parts of the monitoring means can be put together into a unit, but can also be placed separately. Use can be made of a common central unit which can receive and process signals from a great many monitored bearings.

A simpler version of the monitoring means can be placed in a special bearing or bearing housing which also houses the monitored bearing. Then, everything is collected in one place and the programmed values can be fed into a storage circuit contained in the unit.

The transmission ratio between the inner ring and the roller cage when the outer ring is stationary can be derived as the radius of the double roller cage divided by the radius of the inner ring. When the inner ring is stationary, the transmission ratio between the outer ring and the roller cage can be derived as the radius of the double roller cage divided by the radius of the outer ring. When the roller cage is stationary, the transmission ratio between the inner ring and the outer ring will be the radius of the outer ring divided by the radius of the inner ring, that is the transmission ratio will be the same as if the inner ring had run directly on the outer ring. In this case, the rolling elements only serve as intermediate wheels.

If it is assumed by way of example that the radius of an outer or inner ring in the load zone has been deformed by a thousandth of a millimeter, there is obtained for each revolution an additional shift of about 6 thousandths of a millimeter compared to the state before the deformation. When the bearing then makes a thousand revolutions there will be a shift in the distance transversed of about 6 mm, which in a small bearing may amount to an entire rolling element pitch.

Finally, it should be pointed out that only the absolute speeds and their relations are of importance in the geometric comparison.

## Claims

1. A monitoring means for a rolling bearing having rolling elements which are adapted to roll on the races of two relatively movable rings, said means comprising a detecting device for detecting a condition of the rolling bearing, an indicating device for indicating the condition detected, and a generator for supplying power to electronic devices and circuitry of the means, characterised in that the detecting device includes a first detector to detect the number of revolutions of the roller cage relative to one of the rings, a second detector to detect the number of revolutions of the other of the rings relative to the afore-mentioned one of the rings, the detection by first and second detectors being made during the same time period, that the indicating means indicate the condition of the rolling bearing dependent on the result of a comparison of the relationship between the detected numbers of revolutions with a reference value for the same relationship, and that the generator is driven by the relatively movable rings.

2. A monitoring means as claimed in claim 1, wherein said generator is combined with a chargeable battery.

3. A monitoring means as claimed in claim 1, characterised by an evaluating unit for determining the mutual relation between the detected numbers of revolutions and for comparing it with the reference value for the same relation, said reference value having been determined on the basis of the condition of the bearing of the mounting thereof.

4. A monitoring means as claimed in claim 3, wherein one of said detectors is said generator which generates a current pulsating in dependence on the speed.

5. A monitoring means as claimed in claim 3, wherein temperature detectors connected to the evaluating unit are adapted to sense the temperature difference between the interior and exterior of the roller bearing.

6. A monitoring means as claimed in claim 3, comprising a vibration detector connected to the evaluating unit for sensing vibrations in the bearing.

**Patentansprüche**

1. Ueberwachungseinrichtung für ein Rollenlager mit Rollkörpern, die auf den Laufringen zweier im Verhältnis zueinander beweglicher Ringe rollen, umfassend eine Ermittlungsvorrichtung zur Ermittlung eines Zustandes des Rollenlagers, eine Anzeigevorrichtung zur Anzeige des ermittelten Zustandes, und einen Generator zur Stromversorgung der elektronischen Geräte und des Stromkreises der Einrichtung, dadurch gekennzeichnet, dass die Ermittlungsvorrichtung einen ersten Detektor zur Ermittlung der Anzahl Umdrehungen des Rollenkäfigs im Verhältnis zu einem der Ringe und einen zweiten Detektor zur Ermittlung der Anzahl Umdrehungen des anderen Ringes im Verhältnis zum erstgenannten Ring umfasst, wobei die durch den ersten und zweiten Detektor ausgeführte Ermittlung während derselben Zeitperiode ausgeführt wird, dass die Anzeigevorrichtung den Zustand des Rollenlagers auf Basis des Ergebnisses eines Vergleichs des Verhältnisses zwischen den ermittelten Umdrehungsanzahlen mit einem Referenzwert für dasselbe Verhältnis anzeigt, und dass der Generator von den im Verhältnis zueinander beweglichen Ringen angetrieben ist.

2. Ueberwachungseinrichtung nach Anspruch 1, bei der der Generator mit einer aufladbaren Batterie kombiniert ist.

3. Ueberwachungseinrichtung nach Anspruch 1, gekennzeichnet durch eine Auswerteinhet zur Bestimmung des gegenseitigen Verhältnisses zwischen den ermittelten Umdrehungsanzahlen und zum Vergleich dieses Verhältnisses mit dem Referenzwert für dasselbe Verhältnis, wobei der Referenzwert auf Basis des Zustandes des Lagers bei dessen Einbau bestimmt worden ist.

4. Ueberwachungseinrichtung nach Anspruch 3, bei der der eine der Detektoren der genannte Generator ist, der einen in Abhängigkeit von der Drehzahl pulsierenden Strom erzeugt.

5. Ueberwachungseinrichtung nach Anspruch 3, bei der an die Auswerteinheit angeschlossene Temperaturermittler den Temperaturunterschied zwischen dem Inneren und dem Äusseren des Rollenlagers abfühlen.

6. Ueberwachungseinrichtung nach Anspruch 3, umfassend einen an die Auswerteinheit angeschlossenen Vibrationsdetektor zum Abfühlen der Vibrationen im Lager.

**Revendications**

1. Un moyen de contrôle pour palier à roulement ayant des éléments roulants, qui sont adaptés pour rouler sur les chemins de deux couronnes mobiles en mouvement relatif, ledit moyen comprenant un dispositif de détection pour détecter une condition du palier à roulement, un dispositif indicateur pour indiquer la condition détectée et un générateur pour fournir de l'énergie aux dispositifs et circuits électroniques du moyen, caractérisé en ce que le dispositif de détection comprend un premier détecteur pour détecteur le nombre de tours de la cage de roulement par rapport à l'une des couronnes, un second détecteur pour détecter le nombre de tours de l'autre couronne par rapport à celle précédemment mentionnée, la détection par lesdits premier et second détecteurs étant effectuée pendant le même intervalle de temps, en ce que le moyen indicateur indique la condition du palier à roulement en fonction du résultat d'une comparaison de la relation entre les nombres de tours détectés avec une valeur de référence pour la même relation, et en ce que le générateur est commandé par les couronnes mobiles en mouvement relatif.

2. Un moyen de contrôle selon la revendication 1, dans lequel ledit générateur est combiné avec une batterie rechargeable.

3. Un moyen de contrôle selon la revendication 1, caractérisé par une unité d'évaluation pour déterminer la relation mutuelle entre les nombres de tours détectés et pour la comparer avec la valeur de référence pour la même relation, ladite valeur de référence ayant été déterminée sur la base la condition du palier à son montage.

4. Un moyen de contrôle selon la revendication 3, dans lequel l'un desdits détecteurs est ledit générateur qui produit un courant pulsé en fonction de la vitesse.

5. Un moyen de contrôle selon la revendication 3, dans lequel des détecteurs de température reliés à l'unité d'évaluation sont adaptés pour capter la différence de température entre l'intérieur et l'extérieur du palier à roulement.

6. Un moyen de contrôle selon la revendication 3, comprenant un détecteur de vibrations relié à l'unité d'évaluation pour capter les vibrations dans le paliér.